(19) Europäisches Patentamt
European Patent Office
Office européen des brevets

(11) Publication number: **0 083 951**
**B1**

(12) **EUROPEAN PATENT SPECIFICATION**

(45) Date of publication of patent specification: **06.05.87**

(51) Int. Cl.$^4$: **B 41 M 5/24**

(21) Application number: **83200013.7**

(22) Date of filing: **06.01.83**

(54) **Optical recording disc.**

(30) Priority: **13.09.82 NL 8203545**
**12.01.82 NL 8200086**

(43) Date of publication of application:
**20.07.83 Bulletin 83/29**

(45) Publication of the grant of the patent:
**06.05.87 Bulletin 87/19**

(84) Designated Contracting States:
**AT CH DE FR GB IT LI NL SE**

(56) References cited:
**EP-A-0 050 047**
**EP-A-0 050 388**
**DE-A-2 439 848**
**DE-A-2 558 245**
**DE-A-2 632 122**
**US-A-4 000 334**

**CHEMICAL ABSTRACTS, vol. 90, no. 24, 11th June 1979, page 601, no. 195651b, Columbus, Ohio, USA**

(73) Proprietor: **N.V. Philips' Gloeilampenfabrieken**
**Groenewoudseweg 1**
**NL-5621 BA Eindhoven (NL)**

(72) Inventor: **Vriens, Leendert**
**c/o INT. OCTROOIBUREAU B.V. Prof. Holstlaan 6**
**NL-5656 AA Eindhoven (NL)**
Inventor: **De Poorter, Adriaan Wilhelmus**
**c/o INT. OCTROOIBUREAU B.V. Prof. Holstlaan 6**
**NL-5656 AA Eindhoven (NL)**
Inventor: **Jacobs, Bernardus Antonius J.**
**c/o INT. OCTROOIBUREAU B.V. Prof. Holstlaan 6**
**NL-5656 AA Eindhoven (NL)**

(74) Representative: **Weening, Cornelis et al**
**INTERNATIONAAL OCTROOIBUREAU B.V. Prof. Holstlaan 6**
**NL-5656 AA Eindhoven (NL)**

**EP 0 083 951 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to an optical recording disc in which information can be recorded and read optically and which comprises a substrate plate which on at least one side has an ablative recording layer comprising tellurium, selenium and an element which is not or only slightly mixable with Se or Te.

Such a recording disc is known from Netherlands Patent Application No. 7,805,605 in the name of Applicants. In the known disc a recording layer is used of the composition $Te_{33}Sb_{33}Se_{34}$. Another known recording layer used in practice is composed of elementary tellurium.

An ablative recording layer is to be understood to mean a layer in which holes or recesses are formed by exposure to energy-intensive light for example laser light, which is modulated in conformity with the information to be recorded. When information is recorded the disc is rotated at a rate of approximately 150—1800 rpm and exposed to pulsated laser light which is focused on the recording layer. The pulse time is small and is, for example, from $10^{-6}$ to $10^{-8}$ seconds, for example $5 \times 10^{-8}$ seconds. The power of the laser used is also small and by way of example has a value of 2—20 mW on the disc. As a result of the exposure to pulsated laser light the recording layer melts in the exposed areas. The molten recording material retracts to the edge part of the area under the influence of differences in surface energy, a hole or recess having a thickened edge portion being formed. The information bits thus obtained have small diametrical dimensions in the order of magnitude of 0.5—2 µm. The thickness of the recording layer is roughly 15—50 nm.

The recorded information is read by means of laser light which is considerably weaker than the recording laser light and, for example, is a factor 10 less energy-intensive. The detection of the information bits is based on the changed reflection or transmission of the recorded layer at the area of the recesses or holes (bits). Reading in reflection has the advantage that the incident and reflected laser light beam traverse the same optical path for the greater part so that fewer optical elements, for example objectives, are required in the recording and reading apparatus. Both upon recording and reading the laser light beam preferably is focused on the recording layer *via* the substrate plate. Dust particles, scratches and the like present on the surface of the substrate plate then fall outside the depth of focus of the objective which focuses the laser light so that such impurities have no deterimental influence on the quality of the recorded and read information. The substrate plate then must be transparent with respect to the laser light used and be manufactured, for example, from glass or a transparent synthetic resin, for example, polyvinyl chloride, polycarbonate or polymethyl metacrylate. If desired, an auxiliary layer may be provided between the substrate and the recording layer, for example a light-cured lacquer layer. The substrate plate or the auxiliary layer preferably bears at the side of the recording layer an optically readable information track which is spiral-like or is constructed from concentric circles. The information track comprises information areas which are situated alternatively at a higher level and at a lower level and is scanned by means of laser light *via* the transparent substrate plate. The information areas are read in reflection on the basis of phase differences between the incident and reflected laser light beam. The difference in level between the areas is a quarter wavelength of the laser light used according to $\lambda/4n$, wherein $n$ = refractive index. The difference in height, for example amounts to 0.11 µm. The longitudinal dimensions of the information areas vary in accordance with the stored information and are approximately 0.2 to 3 µm. The stored so-called addressing information comprises, for example, data for the control of the laser light beam with which information is recorded such as data relating to the velocity and place of recording.

The composition of the recording layer is quite important in order to obtain good results. Small variations in the composition strongly influence the complex process of the hole-(bit) formation, the reading of the recording information and the scanning of the information track.

According to one object of the invention an optical recording disc of the type mentioned in the opening paragraph is provided in which the recording layer has such a composition that the above-mentioned processes of recording, reading and track following occur optimally.

More in particular an optical recording disc is provided in which the recording layer has a very fine polycrystalline structure with a well defined reproduceable surface texture which shows an excellent physical stability also in the long run.

According to other objects of the invention an optical recording disc is provided in which the recording layer has a great sensitivity (low threshold energy) with respect to laser light, in particular laser light having an emission spectrum in the infrared range, is hardly or not sensitive to stress corrosion or an other oxidation phenomenon, for example under the influence of moisture, and furthermore shows an excellent signal-to-noise ratio upon reading recorded information.

These objects are achieved with a recording disc of the kind mentioned in the opening paragraph which is characterized in that the composition of the recording layer satisfies the formula

$$Te_{x-r}Se_{y+r}S_zQ_q$$

wherein

$x = 76 - 93$ at.%
$y = 6 - 13$ at.%
$z = 0 - 7$ at.%

Q is an element selected from the group consisting of Sb, Sn, Pb and Bi,
q = 1 − 7 at.%
x + y + z + q = 100 at.%
z + q = 2 − 11 at.%
r = 0 − 3 at.% with the understanding that when Q stands for Sb, r is 0 at.%.

For a good understanding of the present invention the problems underlying the invention and the insight gained by Applicants will be explained as follows.

The known practically used recording disc has an ablative recording layer of tellurium. The element tellurium has a great sensitivity to laser light, in particular in the infrared part of the spectrum. For example, the threshold energy for making a bit in a tellurium layer having a thickness of 30 nm, is approximately 0.37 nJ with an exposure pulse of 60 ns and at a light wavelength of 647 nm. However, tellurium has the known disadvantage of a strong oxidation in air so that the sensitivity to laser light absorption strongly deteriorates as a result of the formation of transparent tellurium oxides. As a result of this a tellurium recording layer must be sealed from the atmosphere. It is considered a disadvantage that the tellurium layer when being provided on a substrate or auxiliary layer is converted spontaneously and substantially instantaneously from an amorphous state into a polycrystalline state. A suitable method of providing a tellurium layer is a vapour deposition process or a sputtering process. As a result of the above-mentioned uncontrolled and rapid conversion into a crystalline layer, stress is induced in the layer, which may lead to damage in the recording disc.

The known layer of $Te_{33}Sb_{33}Se_{34}$ mentioned above is a stable amorphous layer. The sensitivity of the layer that is the absorption capacity to laser light especially in the infrared range of the spectrum, is considerably reduced as compared with tellurium so that the layer is less suitable for an efficient practical use. For example, the threshold energy for forming a hole (bit) in a $Te_{33}Sb_{33}Se_{34}$ layer is 0.85 nJ with a pulse time of 60 ns and a wavelength of 647 nm (krypton laser). It has also been found that the surface texture of the layer locally has a low quality level. The layer then has a patchy appearance so that it is assumed that crystallisations have nevertheless taken place. The extent of laser light reflection against the surface of the layer differs locally so that the scanning of the information track may present problems.

In non-prepublished Netherlands Patent Application No. 8,005,693 in the name of Applicants, EP—A—0 050 388 recording layers are described in the following compositions: $Te_{60}Se_{25}Sb_{10}S_5$; $Te_{75}Se_{15}Sb_{10}$ and $Te_{75}Se_{15}Sb_5S_5$.

These layers show a good sensitivity with respect to laser light having an emission spectrum in the infrared range. The recording layers are chemically stable and in particular have a good resistance to oxidation. Applicants have found that after providing the layers having the above-mentioned compositions, a slow conversion takes place from the amorphous state into a polycrystalline state. The duration of the conversion process depends *inter alia* on the tellurium content in the layer in question and varies from a few months to a few years. In that period the layer is physically unstable. The layer comprises crystalline and amorphous parts the area of which varies. The surface of the layer then has no uniform texture, in particular has a patchy appearance and shows differences in reflection with respect to the laser light. As a result of this the scanning of the information track and the focusing of the laser light is impeded. Furthermore the slow conversion amorphous-crystalline sometimes gives rise to a locally occurring coarse crystal growth. In some cases crystals have even been found having longitudinal dimensions of approximately 1 µm. It will be obvious that such large crystals may give rise to serious disturbances with a bit size of approximately 0.7 µm.

The recording layer used in the optical recording disc according to the present invention does not or not noteworthily show the above-mentioned disadvantages. The recording layer has a strong absorption power for laser light, hence a great sensitivity. The sensitivity equals that of pure tellurium, which should be considered as surprising. The bits recorded in the recording layer show an excellent signal-to-noise ratio in the order of magnitude of 55 dB. The layer which is provided on the substrate or auxiliary layer according to a known sputtering process has an excellent resistance to oxidation. The layer is physically stable and has a uniform surface texture which is maintained also in the longer run. More in particular, the laser light reflection is constant over the entire surface of the recording layer so that no local reflection differences occur. The physical stability and surface texture of the recording layer are the result of the fact that the layer has a favourable activation energy for the conversion from amorphous to polycrystalline. On the one hand the activation energy is sufficiently high so that the conversion from amorphous to polycrystalline does not occur too rapidly so that stresses in the layer do not reach an unacceptable level. On the other hand the activation energy is of a sufficiently low level so that at room temperature the said conversion takes place in a period from approximately 30 minutes to at most a few days. As a result of this a polycrystalline layer is obtained having a uniform surface texture. After sputtering or vapour-depositing the recording layer on the substrate or auxiliary layer, the conversion process from amorphous to polycrystalline can be accelerated by means of a thermal treatment. By a thermal treatment, for example at 60—80°, any recording layer according to the invention can be converted into a fine polycrystalline condition within a few minutes to one hour.

Good results are achieved in particular with a recording layer of the above-mentioned formula in which the element denoted by Q is antimony.

In a preferred form of the disc according to the invention a recording layer is used the composition of which satisfies the formula

$$Te_{x'}Se_{y'}S_{z'}Sb_{q'}$$

wherein

$x' = 80 - 87$ at.%
$y' = 10 - 13$ at.%
$z' = 0 - 2$ at.%
$q' = 3 - 5$ at.%
$X' + y' + z' + q' = 100$ at.%.

A recording layer of the above preferred composition has optimally balanced properties. A combination of properties is achieved resulting into an excellent recording of information, an excellent retrieval of the recorded information and a lasting quality of the stored information. The obtained advantages of the recording disc of the above preferred embodiment are a large sensitivity in the infrared range, an excellent stability for oxidation and corrosion, a very fine polycrystalline structure obtained by heating at for example 70°C for a short period and a low sensitivity to craquelure. The term craquelure relates to the formation of very fine cracks into the surface of the recording layer, which cracks particularly upon aging of the recording layer cause a serious drawback in quality. The forming of cracks is strongly suppressed in the layer of the above-mentioned preferred composition.

In still another preferred embodiment of the recording disc according to the invention a recording layer is applied, the composition of which corresponds to the formula

$$Te_{x''}Se_{y''}S_{z''}Sb_{q''}$$

in which

$x'' = 81 - 85$ at.%
$y'' = 11 - 13$ at.%
$z'' = 1 - 2$ at.%
$q'' = 3 - 4$ at.% and
$x'' + y'' + z'' + q'' = 100$ at.%.

In the latter embodiment the sensitivity of the recording layer for formation of cracks is almost fully suppressed. In the tests described in the following examples no craquelure of the recording layer with the above preferred compositions, was observed.

Examples of recording layers suitable for application in the recording disc according to the invention are:

$Te_{83}Se_{12}Sb_3S_2$; $Te_{83}Se_{12}Sb_2S_3$; $Te_{84}Se_{12}Sb_2S_2$; $Te_{86}Se_{11}Sb_2S_1$;
$Te_{86}Se_{11}Sb_{1.5}S_{1.5}$; $Te_{88}Se_{10}Sb_1S_1$; $Te_{88}Se_{10}Sb_2$;
$Te_{88}S_{9.5}Sb_{1.5}S_1$; $Te_{92}Se_6Sb_1S_1$; $Te_{81}Se_{13}Sb_4S_2$;
$Te_{81}Se_{13}Sb_{3.5}S_{2.5}$; $Te_{80}Se_{13}Sb_2S_5$; $Te_{80}Se_{13}Sb_5S_2$;
$Te_{87}Se_{10}Sb_3$; $Te_{84}Se_{11}Sb_4S_1$; $Te_{85}Se_{11}Sb_3S_1$; $Te_{82}Se_{12.5}Sb_{3.5}S_2$
and $Te_{82.5}Se_{12}Sb_4S_{1.5}$.

Good results have been obtained in particular with layers of the compositions with $Te_{83}Se_{12}Sb_3S_2$ and $Te_{82.5}Se_{12}Sb_4S_{1.5}$.

The invention will now be described in greater detail in the examples below with reference to the drawing, the sole figure of which is a cross-sectional view of a recording disc according to the invention.

Example 1

Reference numeral 1 in the Figure denotes a substrate plate of glass having a thickness of 1.3 mm. Substrate plate 1 is provided on one side with a light-cured lacquer layer 2 on the basis of acrylic acid esters.

Lacquer layer 2 has a thickness of, for example, 20 µm and is provided over a part of the surface with a laser light-readable optical information track 3, mostly termed servo track, which comprises so-called addressing information. Such information is useful for the recording process and comprises data related to the velocity and site of recording. Information track 3 has a crenellated profile of information areas 4 situated at a higher level and information areas 5 situated at a lower level. The difference in height of the areas is approximately 0.11 µm. The longitudinal dimensions vary in accordance with the stored information and are 0 .3—3 µm. Lacquer layer 2 is covered with a recording layer 6 having a thickness of 30 nm. The composition of the recording layer is recorded in table 1 below, first column. Recording layer 6 has been provided by means of a sputtering process or vapour deposition process and has then been stored for a few days at room temperature before the tests to be described hereinafter have been carried out. In behalf of the recording data, recording layer 6 in the parts of the servo track 3 not provided with addressing information, is exposed to laser light which is more energy-intensive by approximately a factor 10 than the scanning laser light for the servo track. The recording laser light is focused on the recording layer *via* substrate plate 2 and is pulsated in accordance with the information to be recorded. The pulse duration is

60 ns. The data recorded in layer 6 have a binary character, the information bits consisting of holes 7 formed in the recording layer 6.

In a first test series the threshold energy of the recording layer is determined, which is the minimum quantity of laser light energy required to make a hole (bit) in the recording layer. Recording layers of different compositions have been subjected to this test. In addition to recording layers of the previous given formulae which are used in the optical recording disc according to the invention, the known recording layers of Te and of $Te_{33}Se_{33}Sb_{34}$ have also been included in the test as comparison layers. The layers of $Te_{60}Se_{25}Sb_{10}S_5$ and $Te_{75}Se_{15}Sb_5S_5$ mentioned in the non-prepublished Netherlands Patent Application 8005693 EP—A—0 050 388 have also been tested for their threshold sensitivity in this first test series. According to the test, the recording disc described above is exposed *via* the transparent substrate to pulsated laser light of increasing energy which is focused on the recording layer. The laser light used has a wavelength of 647 nm. The pulse time is 60 ns and the numerical aperture of the objective used is 0.45. In column 2 of table 1 is recorded the minimum quantity to laser light energy expressed in nJ, required to make a hole in at least 99.9% of the exposed sites. The same test was carried out after the recording discs in question had been subjected to a climate test lasting 30 days. According to the climate test the recording disc is subjected to the following temperature cycle at a relative air humidity of 93 ± 3% per 24 hours: storage at 25°C for 12 hours, heating from 25°C to 65°C for 2 hours, storage at 65°C for 2 hours, cooling from 65°C to 25°C for 2 hours, heating from 25°C to 65°C for 2 hours, storage at 65°C for 2 hours and cooling from 65°C to 25°C for 2 hours. The threshold energy determined after 30 days is recorded in column 3 of table 1. In column 4 of table 1 is stated the structure state of the layer immediately after its provision. After a storage time of 6 months at room temperature the structure of the layer has again been evaluated as stated in column 5. In column 6 the quality of the surface of the layer is recorded after a storage time of six months at room temperature.

TABLE 1

| Composition of recording layer in at.% Te | Se | Sb | S | Threshold energy in nJ | threshold energy after climate test in nJ | structure rec. layer | structure rec. layer after 6 months | quality surface after 6 months |
|---|---|---|---|---|---|---|---|---|
| 83 | 12 | 3 | 2 | 0.36 ± 0.02 | 0.46 ± 0.02 | amorphous | polycrystalline | + |
| 86 | 11 | 1.5 | 1.5 | 0.37 ± 0.01 | 0.42 ± 0.03 | amorphous | polycrystalline | + |
| 88 | 10 | 1 | 1 | 0.37 ± 0.02 | 0.54 ± 0.03 | amorphous | polycrystalline | + |
| 33 | 34 | 33 | — | 0.85 ± 0.05 | 0.90 ± 0.1 | amorphous | amorphous | − |
| 100 | — | — | — | 0.37 ± 0.03 | 1] | polycrystalline | polycrystalline | + − |
| 60 | 25 | 10 | 5 | 0.50 ± 0.03 | 0.58 ± 0.03 | amorphous | amorphous and cryst. | − − |
| 75 | 15 | 5 | 5 | 0.45 ± 0.01 | 0.55 ± 0.03 | amorphous | amorphous and cryst. | − − |

The symbols used in table 1 have the following meanings:

1] = the tellurium layer is completely degradated by the conversion into transparent tellurium oxide.

\+ = surface has uniform texture and is finely polycrystalline; no local reflection differences

\+ − = surface has no pronounced uniform texture and has a slightly coarser crystal structure

− = surface has locally a patch appearance and shows reflection differences

− − = surface is partly amorphous and partly crystalline and locally shows reflection differences; incidentally there is a coarse crystal formation.

Example 2

In another test series a number of recording layers were evaporated, each on a substrate plate of polymethylmethacrylate with a thickness of 1.3 mm. Each recording layer has a thickness of 30 nm. The composition of the recording layers is recorded in table 2 below, first column. The obtained recording discs were subjected to a climate test, as described in the previous Example 1, for 60 days. The threshold energy of each recording layer was determined as explained in Example 1 while using laser light with a wavelength of 799 nm, a pulse time of 100 ns and a numerical aperture of the objective of 0.60.

The determined threshold energies are enlisted in column 2 of table 2. The threshold energy for the layer of tellurium (last line in Table 2) is very large and could not be determined due to strong degradation whereby transparent tellurium oxides were formed.

Also the increase in transmission of laser light as a result of the climate test was determined for each recording layer. Thus the transmission after the climate test was measured, compared to that prior to the climate test and the results expressed in a percentage of increase, are recorded in column 3 of table 2.

TABLE 2

| Composition of recording layer in at.% | | | | | threshold energy in nJ | increase in transmission of laser light |
|---|---|---|---|---|---|---|
| Te | Se | Q | | S | | |
| 83 | 12 | Sb | 3 | 2 | 0.38 ± 0.04 | < 2% |
| 88 | 10 | Sb | 1 | 1 | 0.37 ± 0.04 | < 2% |
| 92 | 6 | Sb | 1 | 1 | 0.38 ± 0.04 | < 2% |
| 81 | 13 | Sb | 3.5 | 2.5 | 0.42 ± 0.04 | < 2% |
| 81 | 15 | Bi | 1 | 3 | 0.42 ± 0.04 | < 2% |
| 80 | 13 | Sb | 2 | 5 | 0.44 ± 0.04 | < 2% |
| 100 | — | — | | — | — | > 50% |

Results analogous to those given hereabove in Table 2 for the recording layer $Te_{83}Se_{12}Sb_3S_2$ were obtained with optical recording discs having a substrate plate of glass provided on one side with a light cured lacquer layer which is covered by a recording layer with a thickness of 30 nm applied onto the lacquer layer by means of a magnetron sputter (deposition) process. The recording layers thus applied and tested correspond to the formulae $Te_{84}Se_{11}Sb_4S_1$; $Te_{85}Se_{11}Sb_3S_1$; $Se_{82.5}Se_{12}Sb_4S_{1.5}$ and $Te_{82}Se_{12.5}Sb_{3.5}S_2$. Craquelure *i.e.* formation of fine cracks was not observed.

**Claims**

1. An optical recording disc in which information can be recorded and read optically and which comprises a substrate plate which on at least one side has an ablative recording layer which comprises tellurium, selenium and an element which is not or only slightly mixable with Se or Te, characterised in that the composition of the recording layer satisfies the formula

$$Te_{x-r}Se_{y+r}S_zQ_q$$

wherein

$x = 76 - 93$ at.%
$y = 6 - 13$ at.%
$z = 0 - 7$ at.%
Q is an element selected from the group consisting of Sb, Sn, Pb and Bi;
$q = 1 - 7$ at.%
$x + y + z + q = 100$ at.%
$z + q = 2 - 11$ at.%
$r = 0 - 3$ at.% with the understanding that when Q stands for Sb, r is 0 at.%.

2. An optical recording disc as claimed in Claim 1, characterized in that the element denoted by Q is antimony.

3. An optical recording disc as claimed in Claim 2, characterized in that the composition of the recording layer satisfies the formula

$$Te_{x'}Si_{y'}S_{z'}Sb_{q'}$$

wherein
x' = 80 – 87 at.%
y' = 10 – 13 at.%
z' = 0 – 2 at.%
q' = 3 – 5 at.%
X' + y' + z' + q' = 100 at.%.

4. An optical recording disc as claimed in Claim 3, characterized in that the composition of the recording layer corresponds to the formula

$$Te_{x''}Se_{y''}S_{z''}Sb_{q''}$$

in which
x'' = 81 – 85 at.%
y'' = 11 – 13 at.%
z'' = 1 – 2 at.%
q'' = 3 – 4 at.% and
x'' + y'' + z'' + q'' = 100 at.%.

5. An optical recording disc as claimed in Claim 4, characterized in that the recording layer has the composition $Te_{83}Se_{12}Sb_3S_2$.

6. An optical recording disc as claimed in Claim 4, characterized in that the recording layer has the composition $Te_{82.5}Se_{12}Sb_4S_{1.5}$.

**Patentansprüche**

1. Optische Aufzeichnungsplatte, in der Information auf optischem Wege einschreibbar und auslesbar ist, wobei diese Aufzeichnungsplatte eine Substratplatte enthält, die an zumindest einer Seite mit einer ablativen, Tellur, Selen und ein nicht oder nur geringfügig mit Se oder Te mischbares Element enthaltenden Aufzeichnungsschicht versehen ist, dadurch gekennzeichnet, dass die Zusammensetzung der Aufzeichnungsschicht der Formel

$$Te_{x-r}Se_{y+r}S_zQ_q$$

entspricht, worin
x = 76 – 93 At.%
y = 6 – 13 At.%
z = 0 – 7 At.%
Q ein aus Sb, Sn, Pb und Bi bestehender Gruppe gewähltes Element ist
q = 1 – 7 At.%
x + y + z + q = 100 At.%
z + q = 2 – 11 At.%
r = 0 – 3 At.% sind,
in dem Sinne, dass, wenn Q das Element Sb darstellt, der Wert von r gleich 0 At.% ist.

2. Optische Aufzeichnungsplatte nach Anspruch 1, dadurch gekennzeichnet, dass das mit Q bezeichnete Element Antimon ist.

3. Optische Aufzeichnungsplatte nach Anspruch 2, dadurch gekennzeichnet, dass die Zusammensetzung der Aufzeichnungsschicht folgender Formel entspricht

$$Te_{x'}Se_{y'}S_{z'}Sb_{q'}$$

worin
x' = 80 – 87 At.%
y' = 10 – 13 At.%
z' = 0 – 2 At.%
q' = 3 – 5 At.% und
x' + y' + z' + q' = 100 At.% sind.

4. Optische Aufzeichnungsplatte nach Anspruch 3, dadurch gekennzeichnet, dass die Zusammensetzung der Aufzeichnungsschicht folgender Formel entspricht:

$$Te_{x''}Se_{y''}S_{z''}Sb_{q''}$$

worin

$x'' = 81 - 85$ At.%
$y'' = 11 - 13$ At.%
$z'' = 1 - 2$ At.%
$q'' = 3 - 4$ At.% und
$x'' + y'' + z'' + q'' = 100$ At.% sind.

5. Optische Aufzeichnungsplatte nach Anspruch 4, dadurch gekennzeichnet, dass die Aufzeichnungsschicht die Zusammensetzung $Te_{83}Se_{12}Sb_3S_2$ besitzt.

6. Optische Aufzeichnungsplatte nach Anspruch 4, dadurch gekennzeichnet, dass die Aufzeichnungsschicht die Zusammensetzung $Te_{82,5}Se_{12}Sb_4S_{1,5}$ besitzt.

**Revendications**

1. Disque d'enregistrement optique, dans lequel de l'information peut être enregistrée et lue par voie optique et qui comporte une plaque de substrat, dont au moins une face est munie d'une couche d'enregistrement ablative comportant du tellure, du sélénium et un élément, qui n'est pas ou guère miscible au Se ou Te, caractérisé en ce que la composition de la couche d'enregistrement satisfait à la formule

$$Te_{x-r}Se_{y+r}S_zQ_q$$

dans laquelle

$x = 76 - 93\%$ en atomes
$y = 6 - 13\%$ en atomes
$z = 0 - 7\%$ en atomes
Q est un élément choisi dans le groupe constitué par Sb, Sn, Pb et Bi,
$q = 1 - 7\%$ en atomes
$x + y + z + q = 100\%$ en atomes
$z + q = 2 - 11\%$ en atomes
$r = 0 - 3\%$ en atomes avec la réserve que dans le cas où Q représente Sb, r est 0% en atomes.

2. Disque d'enregistrement optique selon la revendication 1, caractérisé en ce que l'élément indiqué par Q est de l'antimoine.

3. Disque d'enregistrement optique selon la revendication 2, caractérisé en ce que la composition de la couche d'enregistrement satisfait à la formule

$$Te_{x'}Se_{y'}S_{z'}Sb_{q'}$$

dans laquelle

$x' = 80 - 87\%$ en atomes
$y' = 10 - 13\%$ en atomes
$z' = 0 - 2\%$ en atomes
$q' = 3 - 5\%$ en atomes
$x' + y' + z' + q' = 100\%$ en atomes.

4. Disque d'enregistrement optique selon la revendication 3, caractérisé en ce que la composition de la couche d'enregistrement répond à la formule

$$Te_{x''}Se_{y''}S_{z''}Sb_{q''}$$

dans laquelle

$x'' = 81 - 85\%$ en atomes
$y'' = 11 - 13\%$ en atomes
$z'' = 1 - 2\%$ en atomes
$q'' = 3 - 4\%$ en atomes et
$x'' + y'' + z'' + q'' = 100\%$ en atomes.

5. Disque d'enregistrement optique selon la revendication 4, caractérisé en ce que la couche d'enregistrement présente la composition $Te_{83}Se_{12}Sb_3S_2$.

6. Disque d'enregistrement optique selon la revendication 4, caractérisé en ce que la couche d'enregistrement présente la composition $Te_{82,5}Se_{12}Sb_4S_{1,5}$.

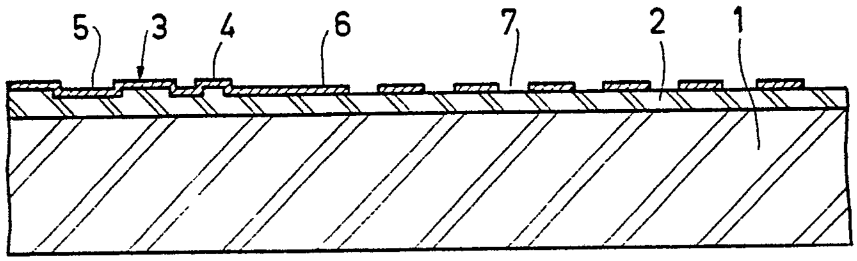
5
3
4
6
7
2
1